# EUROPEAN PATENT SPECIFICATION

(11) **EP 0 884 276 B1**
(45) Date of publication and mention of the grant of the patent: **01.10.2003**
(21) Application number: 98109713.2
(22) Date of filing: 28.05.1998
(51) Int. Cl.: C01B 15/10

(54) **Sodium percarbonate composition and process for producing the same**
Zusammensetzung von Natriumpercarbonat und Verfahren zu deren Herstellung
Composition de percarbonate de sodium et procédé de production de cette composition

(30) Priority: 12.06.1997 JP 15499297
(43) Date of publication of application: 16.12.1998
(73) Proprietor: MITSUBISHI GAS CHEMICAL COMPANY, INC., Chiyoda-ku, Tokyo (JP)
(72) Inventor: Nishizawa Chiharu, Mitsubishi Gas Chem. Comp. Inc., Yokkaichi-shi, Mie-ken (JP); Kokubu, Jun, Mitsubishi Gas Chem. Comp. Inc., Yokkaichi-shi, Mie-ken (JP); Hiro, Yasuo, Mitsubishi Gas Chem. Comp. Inc., Yokkaichi-shi, Mie-ken (JP)
(74) Representative: Gille Hrabal Struck Neidlein Prop Roos

(56) References cited:
- PATENT ABSTRACTS OF JAPAN vol. 015, no. 096 (C-0812), 7 March 1991 & JP 02 307811 A (NIPPON PEROXIDE CO LTD), 21 December 1990
- PATENT ABSTRACTS OF JAPAN vol. 015, no. 072 (C-0808), 20 February 1991 & JP 02 296705 A (MITSUBISHI GAS CHEM CO INC), 7 December 1990
- PATENT ABSTRACTS OF JAPAN vol. 015, no. 440 (C-0883), 11 November 1991 & JP 03 187905 A (MITSUBISHI GAS CHEM CO INC), 15 August 1991

## Description

### BACKGROUND OF THE INVENTION

### 1. Field of the Invention

The present invention relates to a process for producing a sodium percarbonate composition. More particularly, the present invention relates to a process for producing a sodium percarbonate composition which is highly safe, has excellent solubility into water, and can be used advantageously as a bleaching composition or a bleaching component in a detergent in household and industrial applications.

### 2. Description of the Related Arts

Sodium percarbonate is not flammable by itself and a safe compound in an isolated form. However, when sodium percarbonate is brought into contact or mixed with a flammable substance by some reason during handling or storage, it is possible that inflammation is promoted under some conditions.

As the method of decreasing the danger of inflammation in a mixture of sodium percarbonate and a flammable substance, the concentration of active oxygen is decreased by adding a diluent, and inorganic diluents have generally been examined as the diluent. However, a large amount of an inorganic diluent is necessary to achieve the object by addition of inorganic diluents alone, and this decreases the concentration of active oxygen in the sodium percarbonate composition to cause inferior bleaching ability. The solubility also tends to become inferior. For example, a method comprising mixing sodium chloride and sodium sulfate is proposed in Japanese Patent Application Laid-Open No. Showa 58(1983)-204806. However, a large amount of a diluent is necessary to exhibit the desired effect of suppressing the danger in accordance with this method. This causes decrease in the concentration of active oxygen, and this method is practically not satisfactory. It is disclosed in Japanese Patent Application Laid-Open No. Heisei 2(1990)-296705 that inflammation of a mixture of sodium percarbonate with a flammable substance is suppressed by adding sodium bicarbonate to sodium percarbonate. Although sodium bicarbonate shows a larger effect of suppressing inflammation than that of other diluents, sodium bicarbonate used as the diluent has poor solubility, and solubility of the obtained composition is inferior to that of sodium percarbonate containing no sodium bicarbonate.

Thus, in order that the property of sodium percarbonate to promote inflammation of a mixture with a flammable substance may be sufficiently suppressed by adding a diluent, the diluent must be added in a large amount, and naturally, the concentration of active oxygen is markedly decreased. A sodium percarbonate composition having a high concentration of active oxygen is generally desired so that better effects are obtained in applications.

A sodium percarbonate composition is desired to have large solubility in cold water because city water is mostly used for washing. In some applications of sodium percarbonate compositions, sodium percarbonate is dissolved to form a solution having an almost saturated concentration. A sodium percarbonate composition is required to be dissolved rapidly in this case also.

JP-A-02307811 (Patent Abstracts of Japan, Vol. 015, No. 096 (C 0812), discloses a sodium percarbonate composition comprising sodium bicarbonate containing particles having a diameter of less than or equal to 350 µm which are added to a slurry of sodium percarbonate in quantities of 1 to 30 % by weight with respect to sodium percarbonate. The mixture is then agitated and dried to remove water to give a sodium percarbonate/bicarbonate composition having a bulk density between 0.5 to 1.0 g/ml.

### SUMMARY OF THE INVENTION

Accordingly, the present invention has an object to provide a process for producing a sodium percarbonate composition which sufficiently suppresses the property of sodium percarbonate to promote inflammation in a mixture with a flammable substance while the concentration of active oxygen is maintained as high as possible and has excellent solubility.

In extensive studies by the present inventors to achieve the above object, attention was paid to the fact that sodium bicarbonate can suppress the property of sodium percarbonate to promote inflammation and is useful as a diluent to obtain a sodium percarbonate composition which is safe and has an excellent solubility, and as the result of the studies, it was found that sodium bicarbonate which contains a limited amount of particles having larger diameters, comprises particles having needle shapes (needle crystals) or plate shapes, and has a small bulk density shows an excellent effect of suppressing the property to promote inflammation. Besides, it was invented that heating of the sodium percarbonate composition diluted by the above sodium bicarbonate improves the solubility of the composition. The present invention has been completed on the basis of this knowledge.

Accordingly, the present invention provides a process for producing a sodium percarbonate composition comprising sodium percarbonate and, in an amount of 5 to 50 % by weight of sodium percarbonate, sodium percarbonate of sodium bicarbonate containing 10 % by weight or less of particles having a diameter of 350 µm or more, which process comprises heating the sodium percarbonate composition described above at a temperature of 80 to 120 °C for 10 to 120 minutes.

### DESCRIPTION OF THE PREFERRED EMBODIMENTS

In the sodium percarbonate composition produced according to the present invention, sodium bicarbonate is mixed with sodium percarbonate as the diluent to increase safety of sodium percarbonate. The present invention is characterized in that the distribution of the particle size and the amount of sodium bicarbonate are specified, and in that the composition is heated at a specific temperature for a specific time.

In the present invention, sodium bicarbonate has such a distribution of the particle size that the content of particles having a diameter of 350 µm or more is 10 % by weight or less, preferably 5 % by weight or less, so that the sodium percarbonate composition remains safe and solubility of sodium percarbonate is not decreased.

The amount of sodium bicarbonate in the composition is in the range of 5 to 50 % by weight, preferably 7 to 30 % by weight, more preferably 10 to 30 % by weight, most preferably 15 to 25 % by weight, of sodium percarbonate so that safety of the sodium percarbonate composition is exhibited and solubility of sodium percarbonate is maintained similarly to those obtained by the above distribution of the particle size.

In the present invention, it is preferable for achieving uniform mixing of sodium percarbonate and sodium bicarbonate that sodium bicarbonate comprises particles having needle shapes (needle crystals) or plate shapes and has a bulk density of 0.6 to 1.1 g/ml, preferably 0.8 to 1.0 g/ml, more preferably 0.8 to 0.9 g/ml. The particles may include particles having shapes of plates, pillars, and short cylinders when the particles are observed under a microscope.

Examples of the process for obtaining the sodium percarbonate composition by mixing sodium percarbonate with sodium bicarbonate include a process in which sodium bicarbonate is added to wet crystals of sodium percarbonate, and the obtained mixture is formed into granules; or a process in which powder of sodium bicarbonate is mixed with sodium percarbonate which is obtained as powder or granules after drying, and the process is not particularly limited. In the present invention, the former process is preferable because sodium bicarbonate can be mixed more uniformly.

In the present invention, solubility, particularly solubility at a low temperature, of the sodium percarbonate composition obtained in accordance with the above process is further increased by a heat treatment. In the present invention, the sodium percarbonate composition is treated for drying at a temperature in the range of 80 to 120°C for 10 to 120 minutes. The process for the heat treatment is not particularly limited. A process of fluidized drying in which heated air is blown into the sodium percarbonate composition at the bottom to fluidize the composition is advantageously adopted because excessive drying can be prevented.

Sodium bicarbonate used in the present invention may be any of industrial grades or food additive grades. When sodium bicarbonate is used, it is active for safety of sodium percarbonate that sodium bicarbonate is used singly. However, sodium bicarbonate may be used as a mixture with at least one diluent, such as sodium carbonate, sodium sulfate, magnesium sulfate, and sodium chloride.

To summarize the advantages obtained by the present invention, the sodium percarbonate composition produced according to the present invention is safe and has excellent solubility because the distribution of the particle size and the amount of sodium bicarbonate mixed with sodium percarbonate are specified, and can be used advantageously for bleaching agents and detergents.

### EXAMPLES

The present invention is described more specifically with reference to examples and comparative examples in the following. However, the present invention is not limited by the examples. In the examples and the comparative examples, % means % by weight unless otherwise mentioned.

### Measurement of the particle size

The particle size was measured in accordance with the method of Japanese Industrial Standard Z8801. A sample in an amount of about 100 g was placed in the standard sieves and shaken by a sieve shaker for 10 minutes. Then, the samples on individual sieves were weighed to obtain the distribution of the particle size.

### Measurement of the bulk density

The bulk density was measured in accordance with the method for measurement of the bulk density of Japanese Industrial Standard K3362 (Test method for synthetic detergents).

### Solubility test

The solubility was evaluated at a low temperature (5°C, 5%) and at an ambient temperature (20°C, 10%) in accordance with the following method.

Into two 1 liter beakers, 950 ml of water of 5°C (±0.5°C) and 900 ml of water of 20°C (±0.5°C) were placed. While water was stirred at 200 rpm using flag-type stirrers, 50 g and 100 g, respectively, of samples were added, and change in the electric conductivity of the aqueous solutions was measured. The period of time passed before the electric conductivity reached a constant value was regarded as the period of time required to achieve complete dissolution. The solubilities at a low temperature and at an ambient temperature were evaluated from these periods of time.

### Flammability test

A sample which passed a sieve having an opening of 1180 µm was kept in a desiccator containing dry silica gel at a temperature of 20±5°C for 24 hours or more. Separately, sapwood powder of Japan cedar which did not passed a sieve having an opening of 250 µm and passed a sieve having an opening of 500 µm was dried at 105°C for 4 hours and then kept in a desiccator containing dry silica gel for 24 hours or more. The sample dried above in an amount of 24 g was mixed with 6 g of the sapwood powder dried above. The obtained mixture was placed in a cone cup having a ratio of the height to the diameter of the bottom of 1:1.75. Then, the cone was placed upside down on a heat-insulating plate to form a heap of a cone shape, which was then kept standing in an atmosphere of a temperature of 20±5°C and a humidity of 50±10 % for 1 hour. A circular nichrome wire heated to 1000°C was brought into contact with the bottom part of the heap, and the condition of the heap was observed with respect to ignition and inflammation. When the mixture of the sample and the wood powder was ignited and flame remained until the entire wood powder burned, the result was evaluated as flammable. The test was repeated 10 times with every sample.

### Example 1

In a stainless steel reactor equipped with a stirrer, a thermometer, and a mantle for cooling, 30 liter of a solution for reaction containing 12 % of sodium carbonate (Na₂CO₃) and 2 % of hydrogen peroxide (H₂O₂) was prepared. While the prepared solution was held at a temperature of 15 to 20°C and kept being stirred, 2.5 kg of a 60 % aqueous solution of hydrogen peroxide and 3.0 kg of Na₂CO₃ were simultaneously added to the solution in about one hour. The obtained product was aged at the same temperature for 1 hour while being stirred.

The obtained reaction slurry was treated by a centrifuge to obtain about 3.5 kg of wet sodium percarbonate.

To the wet sodium percarbonate thus obtained, sodium bicarbonate which comprised particles having needle shapes (partially comprised particles having plate shapes), contained 3.8 % of particles having a diameter of 350 µm or more, and had a bulk density of 0.84 g/ml was added in an amount of 15 % of sodium percarbonate. After a binder was added to the mixture and the content of water was adjusted to 10 % by adding water, the mixture was kneaded for 30 minutes. The wet bulk material obtained after kneading was extruded through a granulator equipped with a screen having a pore size of 1.0 mm to form granules, which were then dried to obtain a sodium percarbonate composition.

The obtained sodium percarbonate composition was heat treated in a fluidized drier by blowing heated air of 100°C at the bottom for 35 minutes.

The obtained sodium percarbonate composition was evaluated with respect to solubility and safety by the solubility test and the flammability test, respectively. It was found that the composition was completely dissolved in 3 minutes at the low temperature and in 1.5 minutes at the ambient temperature and that the composition showed safety to such a degree that inflammation took place in none of 10 repeated tests.

### Example 2

The same procedures as those conducted in Example 1 were conducted except that sodium bicarbonate which contained 0.7 % of particles having a diameter of 350 µm or more and had a bulk density of 0.94 g/ml was added in an amount of 20 % of sodium percarbonate and that the obtained sodium percarbonate composition was heat treated by blowing heated air of 90°C for 30 minutes.

The obtained sodium percarbonate composition was evaluated with respect to solubility and safety in accordance with the same methods. It was found that the composition was completely dissolved in 2.5 minutes at the low temperature and in 1.5 minutes at the ambient temperature and that the composition showed safety to such a degree that inflammation took place in none of 10 repeated tests.

### Example 3

The same procedures as those conducted in Example 1 were conducted except that sodium bicarbonate which contained 8.0 % of particles having a diameter of 350 µm or more and had a bulk density of 0.87 g/ml was added in an amount of 25 % of sodium percarbonate and that the obtained sodium percarbonate composition was heat treated by blowing heated air of 85°C for 40 minutes.

The obtained sodium percarbonate composition was evaluated with respect to solubility and safety in accordance with the same methods. It was found that the composition was completely dissolved in 3 minutes at the low temperature and in 2 minutes at the ambient temperature and that the composition showed safety to such a degree that inflammation took place in none of 10 repeated tests.

### Example 4

The same procedures as those conducted in Example 1 were conducted except that sodium bicarbonate which contained 3.8 % of particles having a diameter of 350 µm or more and had a bulk density of 0.84 g/ml was added and that the obtained sodium percarbonate composition was heat treated by blowing heated air of 100°C for 20 minutes.

The obtained sodium percarbonate composition was evaluated with respect to solubility and safety in accordance with the same methods. It was found that the composition was completely dissolved in 3 minutes at the low temperature and in 1.5 minutes at the ambient temperature and that the composition showed safety to such a degree that inflammation took place in none of 10 repeated tests.

### Example 5

The same procedures as those conducted in Example 1 were conducted except that sodium bicarbonate which comprised particles having short cylinder shapes with round ends (partially comprised particles having pillar shapes), contained 5.9 % of particles having a diameter of 350 µm or more, and had a bulk density of 1.04 g/ml was added and that the obtained sodium percarbonate composition was heat treated by blowing heated air 100°C for 30 minutes.

The obtained sodium percarbonate composition was evaluated with respect to solubility and safety in accordance with the same methods. It was found that the composition was completely dissolved in 3.5 minutes at the low temperature and in 2 minutes at the ambient temperature and that the composition showed safety to such a degree that inflammation took place in none of 10 repeated tests.

### Comparative Example A

The same procedures as those conducted in Example 1 were conducted except that sodium bicarbonate which contained 8 % of particles having a diameter of 350 µm or more and had a bulk density of 0.87 g/ml was added in an amount of 25 % of sodium percarbonate and that the obtained sodium percarbonate composition was heat treated by blowing heated air of 70°C for 5 minutes.

The obtained sodium percarbonate composition was evaluated with respect to solubility and safety in accordance with the same methods. It was found that the composition was completely dissolved in 4.5 minutes at the low temperature and in 2 minutes at the ambient temperature and that the composition showed safety to such a degree that inflammation took place in none of 10 repeated tests.

### Example 7

The same procedures as those conducted in Example 1 were conducted except that sodium bicarbonate which contained 3.8 % of particles having a diameter of 350 µm or more and had a bulk density of 0.84 g/ml was added in an amount of 20 % of sodium percarbonate and that the obtained sodium percarbonate composition was heat treated by blowing heated air of 90°C for 130 minutes.

The obtained sodium percarbonate composition was evaluated with respect to solubility and safety in accordance with the same methods. It was found that the composition was completely dissolved in 4 minutes at the low temperature and in 2 minutes at the ambient temperature and that the composition showed safety to such a degree that inflammation took place in none of 10 repeated tests.

### Comparative Example 1

A sodium percarbonate composition was obtained after granulation and drying in accordance with the same procedures as those conducted in Example 1 except that sodium bicarbonate as the diluent was not added to the wet sodium percarbonate.

The obtained sodium percarbonate composition was evaluated with respect to solubility and safety in accordance with the same methods. It was found that the composition was completely dissolved in 2.5 minutes at the low temperature and in 1.5 minutes at the ambient temperature. However, samples were burnt in all 10 repeated flammability tests, and the composition had markedly inferior safety to that shown above in Examples 1 to 7.

### Comparative Example 2

The same procedures as those conducted in Example 1 were conducted except that sodium bicarbonate which comprised particles having short cylinder shapes with round ends (partially comprised particles having pillar shapes), contained 15.4 % of particles having a diameter of 350 µm or more, and had a bulk density of 1.12 g/ml was added and that the obtained sodium percarbonate composition was heat treated by blowing heated air of 100°C for 30 minutes.

The obtained sodium percarbonate composition was evaluated with respect to solubility and safety in accordance with the same methods. It was found that it took 6.5 minutes at the low temperature and 3.5 minutes at the ambient temperature to completely dissolve the composition, and the composition had markedly inferior solubility to that shown above in Examples 1 to 7. The composition showed safety to such a degree that inflammation took place in none of 10 repeated tests.

### Comparative Example 3

The same procedures as those conducted in Comparative Example 2 were conducted except that the obtained sodium percarbonate composition was heat treated by blowing heated air of 70°C for 5 minutes.

It was found that it took 6.5 minutes at the low temperature and 3.5 minutes at the ambient temperature to completely dissolve the obtained sodium percarbonate composition. Solubility and safety were the same as those shown in Comparative Example 2.

## Claims

1. A process for producing a sodium percarbonate composition comprising sodium percarbonate and, in an amount of 5 to 50 % by weight of sodium percarbonate, sodium bicarbonate containing 10 % by weight or less of particles having a diameter of 350 µm or more, which process comprises heating the sodium percarbonate composition at a temperature of 80 to 120 °C for 10 to 120 minutes.

2. The process according to claim 1, wherein sodium bicarbonate has a bulk density of 0.6 to 1.1 g/ml.

3. The process according to claim 1, wherein particles of sodium bicarbonate have needle shapes or plate shapes.

4. The process according to claim 2, wherein particles of sodium bicarbonate have needle shapes or plate shapes.

## Patentansprüche

1. Verfahren zur Herstellung einer Natriumpercarbonat-Zusammensetzung, umfassend Natriumpercarbonat und, in einer Menge von 5 bis 50 Gew.-% des Natriumpercarbonat. Natriumbicarbonat, enthaltend 10 Gew.-% oder weniger Partikel mit einem Durchmesser von 350 µm oder mehr, wobei das Verfahren Erwärmen der Natriumpercarbonat-Zusammensetzung auf eine Temperatur von 80 bis 120°C während 10 bis 120 Minuten umfasst.

2. Verfahren nach Anspruch 1, wobei das Natriumbicarbonot eine Schüttdichte von 0,6 bis 1,1 g/ml aufweist.

3. Verfahren nach Anspruch 1, wobei Partikel aus Natriumbicarbonat Nadelform oder Plöttchenform aufweisen.

4. Verfahren nach Anspruch 2, wobei Partikel aus Natriumbicarbonat Nadelform oder Plättchenform aufweisen.

## Revendications

1. Procédé de production d'une composition de percarbonate de sodium comprenant du percarbonate de sodium et, en une quantité de 5 à 50 % en poids du percarbonate de sodium, du bicarbonate de sodium contenant 10 % en poids ou moins de particules ayant un diamètre de 350 µm ou plus, lequel procédé comprend l'étape consistant à chauffer la composition de percarbonate de sodium à une température de 80 à 120°C pendant 10 à 120 minutes.

2. Procédé selon la revendication 1, dans lequel le bicarbonate de sodium a une densité apparente de 0,6 à 1,1 g/ml.

3. Procédé selon la revendication 1, dans lequel les particules de bicarbonate de sodium sont en forme d'aiguilles ou en forme de plaques.

4. Procédé selon la revendication 2, dans lequel les particules de bicarbonate de sodium sont en forme d'aiguilles ou en forme de plaques.
